# EUROPEAN PATENT APPLICATION

(11) **EP 4 101 679 A1**
(43) Date of publication of application: **14.12.2022**
(21) Application number: 20917774.0
(22) Date of filing: 28.12.2020
(51) Int. Cl.: B60L 3/00, H02J 7/00, B60L 53/65

(54) **MANAGEMENT DEVICE, MANAGEMENT SYSTEM, MANAGEMENT METHOD, AND PROGRAM**

(30) Priority: 04.02.2020 US 202062969981 P; 18.05.2020 JP 2020086544
(71) Applicant: Panasonic Intellectual Property Corporation of America, Torrance, CA 90504 (US)
(72) Inventor: UNAGAMI, Yuji, Osaka-shi, Osaka 540-6207 (JP); INOKUCHI, Toshihiro, Osaka-shi, Osaka 540-6207 (JP); OHMORI, Motoji, Osaka-shi, Osaka 540-6207 (JP)
(74) Representative: Grünecker Patent- und Rechtsanwälte PartG mbB
(86) International application number: PCT/JP2020/049066
(87) International publication number: WO 2021/157259

(57) **Abstract**

A management device (10A) includes: a manager (12A) that maintains management information by obtaining an identifier of a battery device and an item of position information indicating a position of the battery device a plurality of times and, each time the identifier and the item of position information are obtained, recording the identifier and the item of position information in the management information in association with each other; a determiner (13A) that determines whether a same identifier is associated with a plurality of items of position information different from each other at one point in time; and an outputter (14A) that outputs information for disabling authentication of the battery device when the determiner (13A) determines that the same identifier is associated with the plurality of items of position information, and causes a start process of a vehicle to stop based on a failure of authentication after the information is output.

## Description

### [Technical Field]

The present invention relates to a management device, a management system, a management method, and a program.

### [Background Art]

Vehicles such as electric bicycles and electric cars include secondary batteries (also referred to as "battery devices") and are driven by electricity.

There are conventional techniques of detecting an unauthorized charging/discharging device connected to an electric car or the like to prevent the electric car or the like from being connected to the unauthorized charging/discharging device (see Patent Literature (PTL) 1).

### [Citation List]

### [Patent Literature]

[PTL 1]
Japanese Patent No. 5999566

### [Summary of Invention]

### [Technical Problem]

When an invalid (unauthorized) battery device which is not a battery device authorized to be used in a vehicle is used in the vehicle, a fault may occur when driving the vehicle.

The present invention therefore provides a management device, etc. that prevent use of an invalid battery device.

### [Solution to Problem]

A management device according to an aspect of the present invention is a management device that manages validity of a battery device used as a power source of a vehicle, the management device including: a manager that maintains management information by obtaining an identifier of the battery device and an item of position information indicating a position of the battery device a plurality of times and, each time the identifier and the item of position information are obtained, recording the identifier obtained and the item of position information obtained in the management information in association with each other; a determiner that determines whether a same identifier is associated with a plurality of items of position information different from each other at one point in time, with reference to the management information; and an outputter that outputs information for disabling authentication of the battery device when the determiner determines that the same identifier is associated with the plurality of items of position information, and causes a start process of the vehicle to stop based on a failure of authentication in an authentication process performed between the vehicle and the battery device after the information is output.

These general and specific aspects may be implemented using a system, a method, an integrated circuit, a computer program, or a computer-readable recording medium such as CD-ROM, or any combination of a system, a device, an integrated circuit, a computer program, and a recording medium.

### [Advantageous Effects of Invention]

A management device according to the present invention can prevent use of an invalid battery device.

### [Brief Description of Drawings]

[FIG. 1]

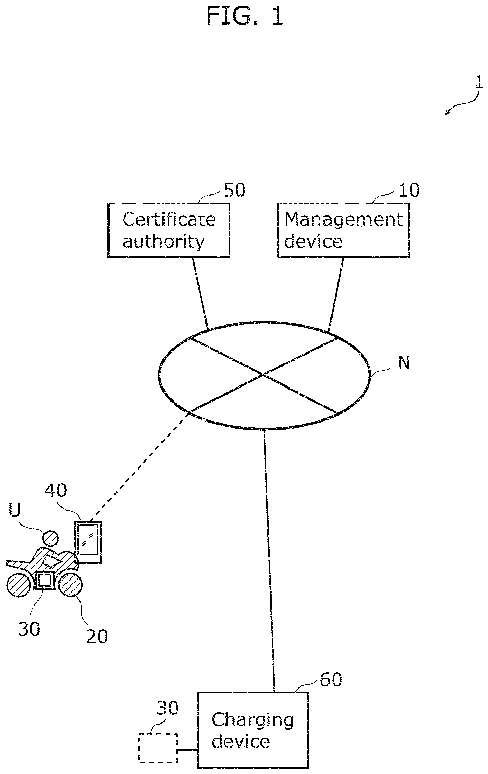

   FIG. 1 is a block diagram schematically illustrating a structure of a management system in an embodiment.
[FIG. 2]

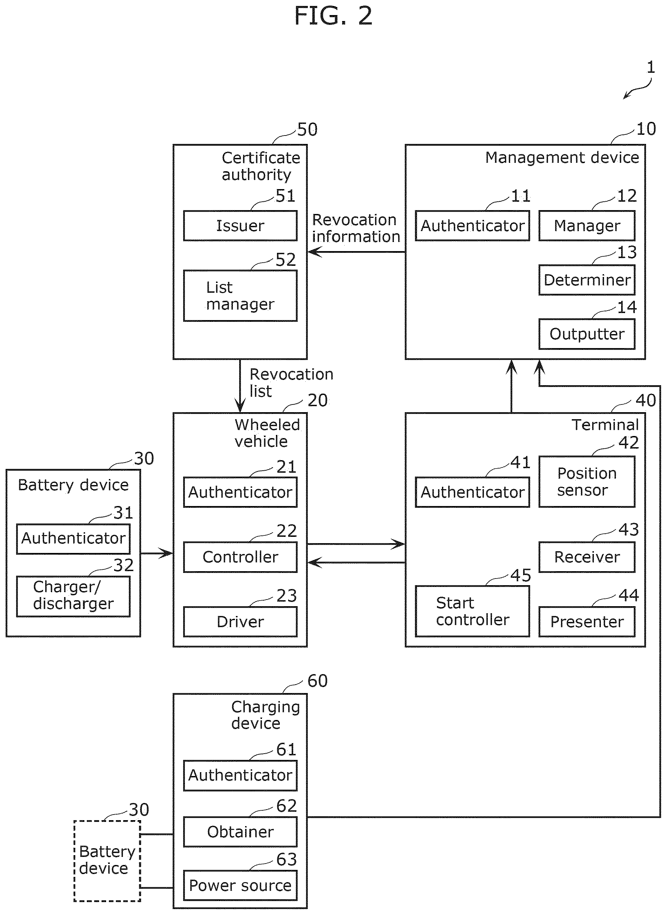

   FIG. 2 is a block diagram illustrating functions of each device included in the management system in the embodiment.
[FIG. 3]

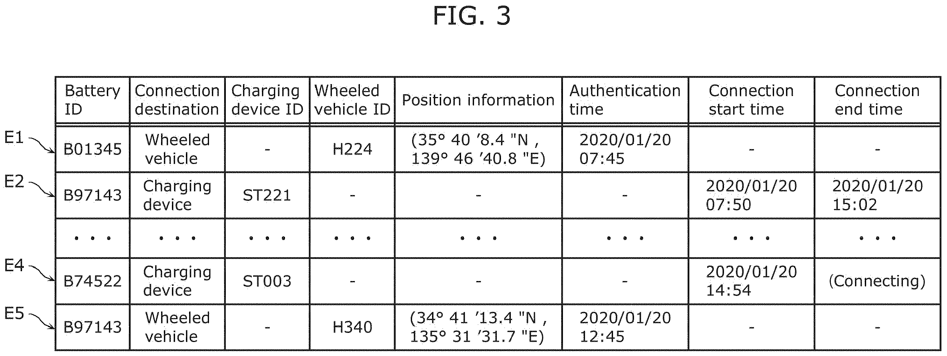

   FIG. 3 is an explanatory diagram illustrating a first example of management information in the embodiment.
[FIG. 4]

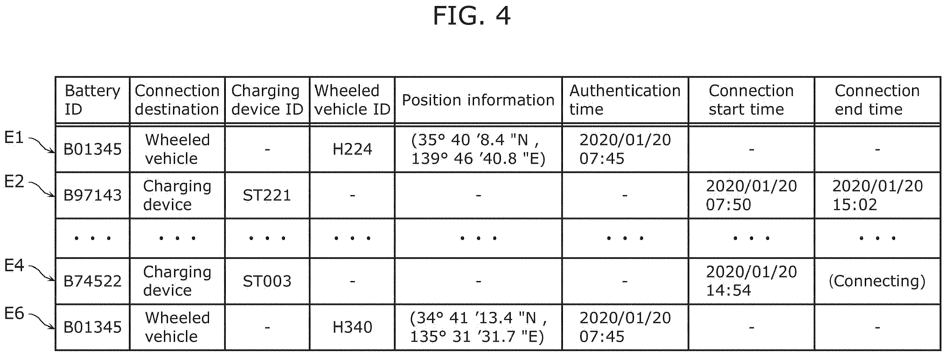

   FIG. 4 is an explanatory diagram illustrating a second example of management information in the embodiment.
[FIG. 5]

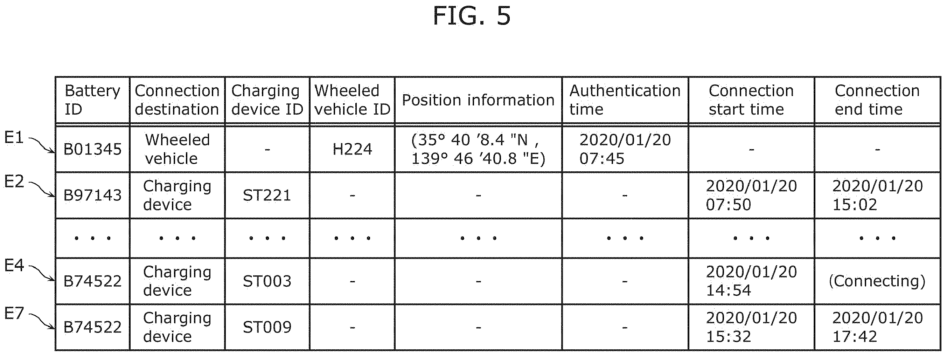

   FIG. 5 is an explanatory diagram illustrating a third example of management information in the embodiment.
[FIG. 6]

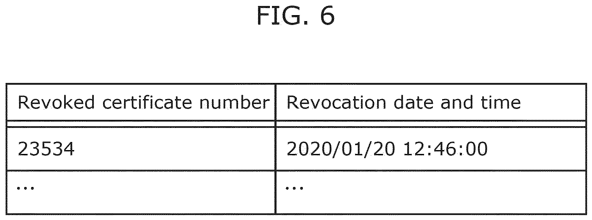

   FIG. 6 is an explanatory diagram illustrating an example of a revocation list in the embodiment.
[FIG. 7]

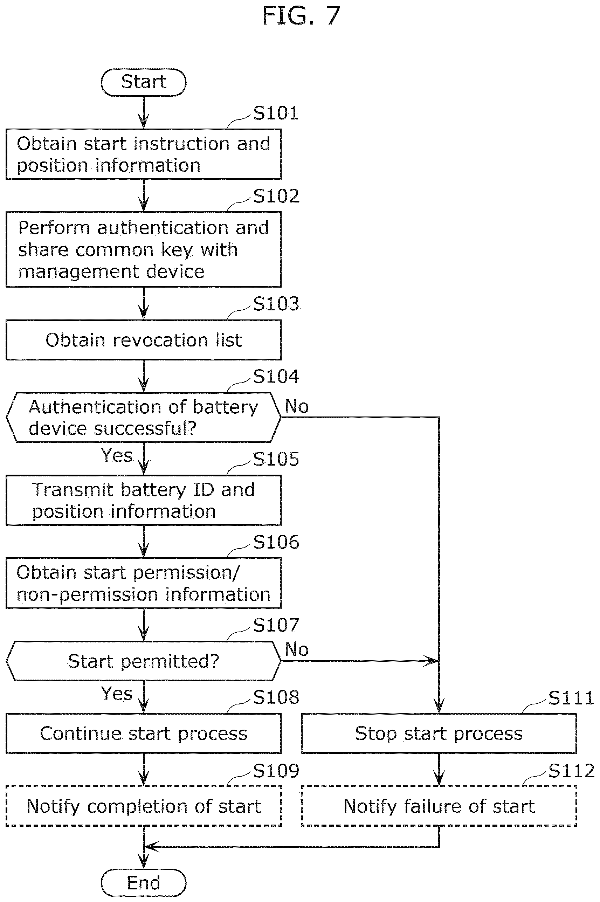

   FIG. 7 is a flowchart illustrating a process by a wheeled vehicle in the embodiment.
[FIG. 8]

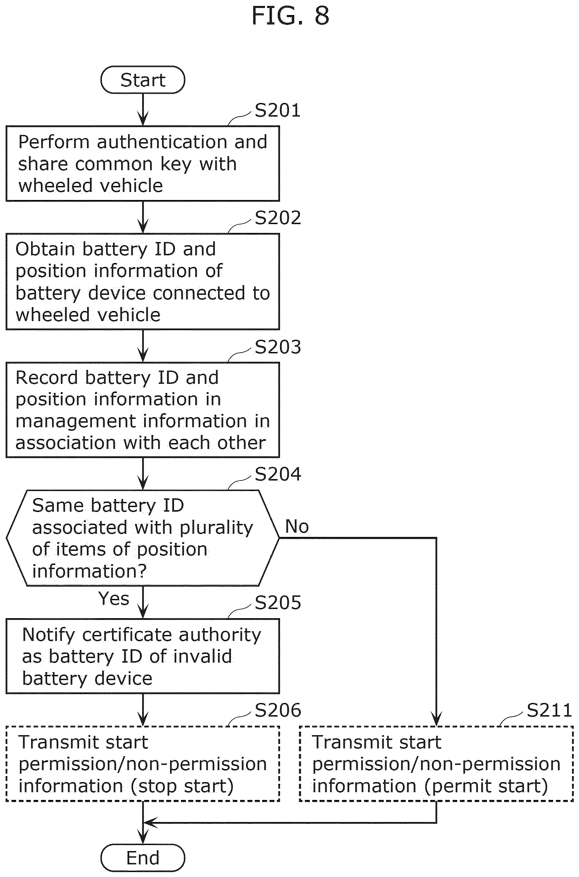

   FIG. 8 is a flowchart illustrating a first process by a management device in the embodiment.
[FIG. 9]

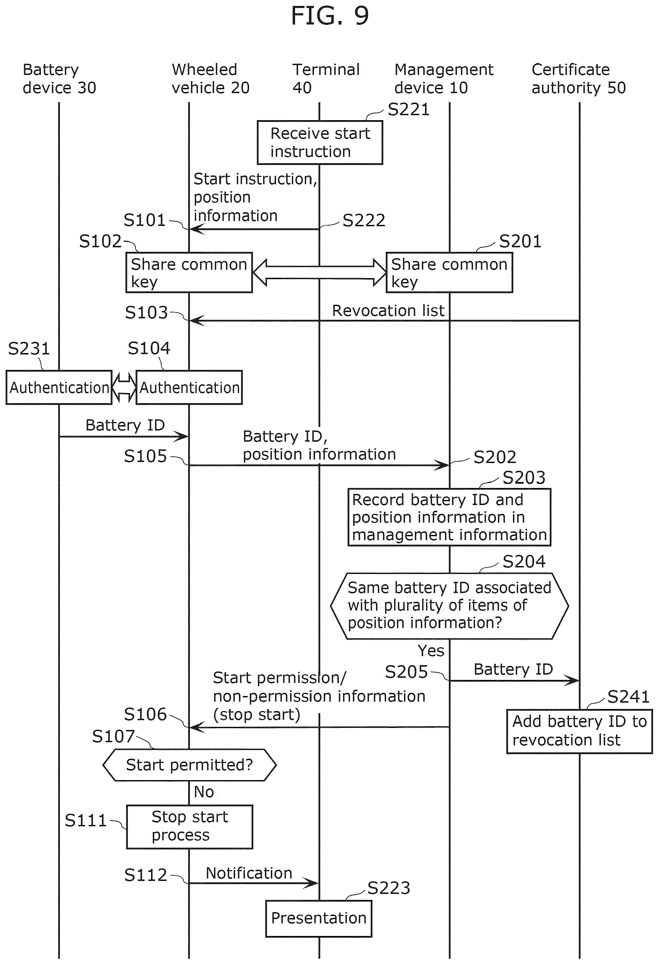

   FIG. 9 is a sequence diagram illustrating a first process by the management system in the embodiment.
[FIG. 10]

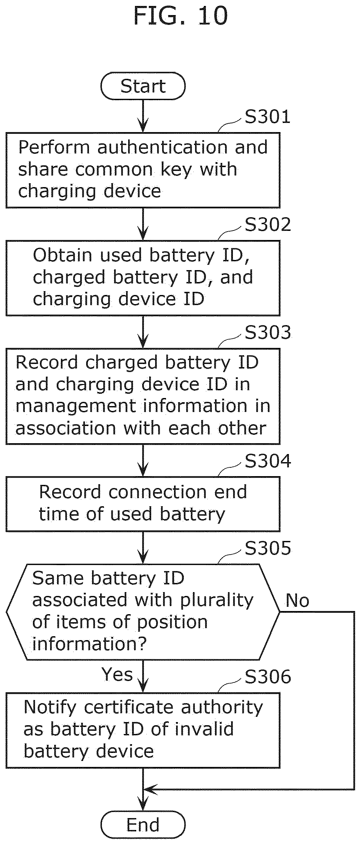

   FIG. 10 is a flowchart illustrating a second process by the management device in the embodiment.
[FIG. 11]

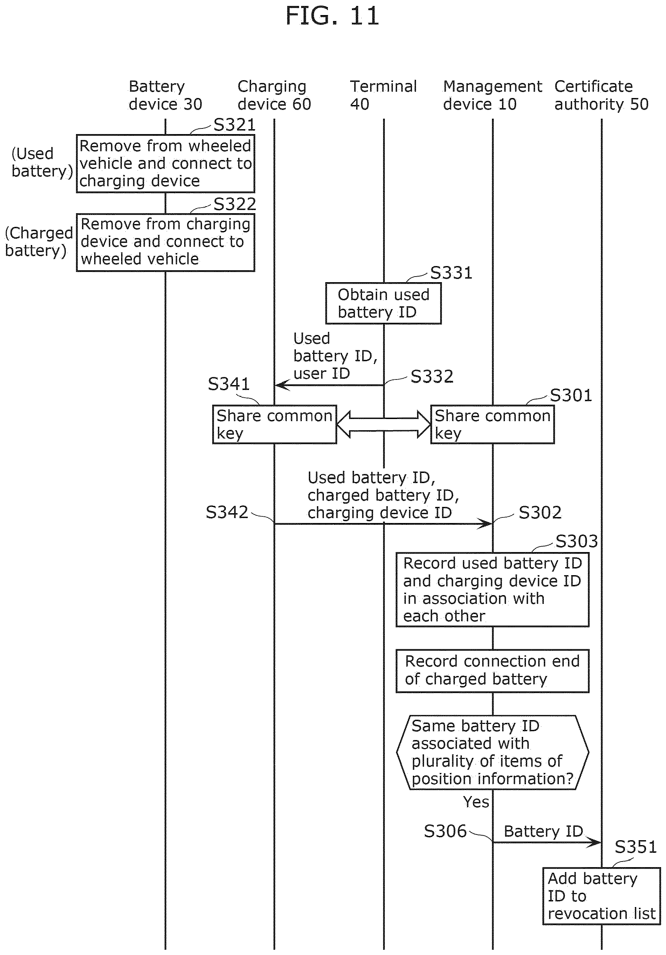

   FIG. 11 is a sequence diagram illustrating a second process by the management system in the embodiment.
[FIG. 12]

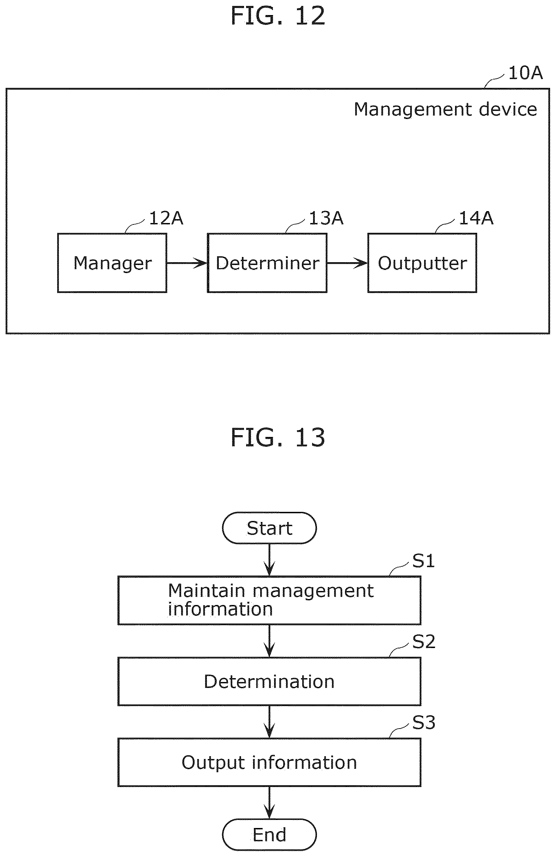

   FIG. 12 is a block diagram schematically illustrating a structure of a management device in a variation of the embodiment.
[FIG. 13]
   FIG. 13 is a flowchart illustrating a process by the management device in the variation of the embodiment.

### [Description of Embodiments]

### (Underlying Knowledge Forming Basis of the Present Invention)

The present inventors found the following problem with the techniques relating to electrically driven wheeled vehicles described in the Background Art section.

One of the vehicles driven by electricity is an electric wheeled vehicle (hereafter also simply referred to as "wheeled vehicle"). The use of the foregoing vehicles will be described below, taking a wheeled vehicle as an example.

Examples of electric wheeled vehicles include electric bicycles, electric cars, electric motorcycles, and electric scooters. Vehicles driven by electricity include not only wheeled vehicles but also manned drones and the like.

One service form for wheeled vehicles is as follows: A company charges battery devices and lends the battery devices to users, and the users connect the battery devices to wheeled vehicles and use the wheeled vehicles. The company recharges the battery devices returned after the use, and lends the battery devices to the users again.

In this service form, various battery devices are connected to a wheeled vehicle one by one. Battery devices include not only battery devices authorizedly manufactured for the wheeled vehicle (also referred to as "valid battery devices") but also battery devices not authorized for use in the wheeled vehicle (also referred to as "invalid battery devices"). If an invalid battery device is used to drive the wheeled vehicle, a fault or a failure may occur in the operation of the wheeled vehicle.

Suppose each valid battery device is equipped with an authentication chip in order to prevent use of an invalid battery device. Before the wheeled vehicle starts, the wheeled vehicle performs an authentication process on a battery device in a start process, and starts in the case where the wheeled vehicle determines that the battery device has a valid authentication chip.

In such a case, if authentication information stored in an authentication chip of a valid battery device is extracted and copied to another battery device, then an invalid battery device having the same authentication information as the valid battery device is obtained. If this invalid battery device is connected to the wheeled vehicle, the authentication process between the wheeled vehicle and the battery device succeeds. As a result, the wheeled vehicle is driven using the invalid battery device, which may cause a fault or a failure.

There is thus a need to prevent use of an invalid battery device.

The present invention provides a management device, etc. that prevent use of an invalid battery device.

A management device according to an aspect of the present invention is a management device that manages validity of a battery device used as a power source of a vehicle, the management device including: a manager that maintains management information by obtaining an identifier of the battery device and an item of position information indicating a position of the battery device a plurality of times and, each time the identifier and the item of position information are obtained, recording the identifier obtained and the item of position information obtained in the management information in association with each other; a determiner that determines whether a same identifier is associated with a plurality of items of position information different from each other at one point in time, with reference to the management information; and an outputter that outputs information for disabling authentication of the battery device when the determiner determines that the same identifier is associated with the plurality of items of position information, and causes a start process of the vehicle to stop based on a failure of authentication in an authentication process performed between the vehicle and the battery device after the information is output.

According to the above aspect, the management device determines whether the same identifier of the battery device is associated with a plurality of items of position information, with reference to the management information. Thus, the management device can manage whether information unique to the battery device is copied unauthorizedly. The identifier of the battery device is information unique to the battery device, and one identifier is assigned to one battery device. A state in which the same identifier is associated with a plurality of items of position information indicates that the information unique to the battery device is copied and held by a plurality of battery devices. The management device outputs information for disabling authentication of the battery device having the copied unique information, to cause the start process of the vehicle to stop. The management device thus contributes to prevention of use of the battery device. Hence, the management device can prevent use of an invalid battery device.

The authentication process may be a public key-based authentication process, and the outputter may output, as the information, revocation information for revoking a public key certificate of the battery device to a certificate authority, and cause the start process of the vehicle to stop based on the failure of the authentication in the public key-based authentication process performed between the vehicle and the battery device using the revocation information which the vehicle obtains from the certificate authority after the revocation information is output to the certificate authority.

According to the above aspect, the management device causes, by the output information, the public key-based authentication process between the vehicle and the battery device to fail, thus causing the start process of the vehicle to stop. In this way, the management device more easily prevents an invalid battery device from being connected to the vehicle and used. Hence, the management device can prevent use of an invalid battery device more easily.

The manager may obtain the identifier and the item of position information provided in the start process of the vehicle, and the outputter may output, as the information, information for stopping the start process to the vehicle.

According to the above aspect, the management device obtains the identifier and the position information provided in the start process of the vehicle, and causes the ongoing start process to stop in the case where the management device determines that the same identifier is associated with a plurality of items of position information. Thus, the management device can cause the start of the vehicle in a state of being connected to an invalid battery device to fail without even one success. Hence, the management device can prevent use of an invalid battery device more reliably.

The manager may obtain the identifier and the item of position information provided when the battery device is connected to a charging device.

According to the above aspect, the management device obtains the identifier and the position information provided when the battery device is connected to the charging device, and determines whether the same identifier is associated with a plurality of items of position information. Thus, the management device can find an invalid battery device when the battery device is connected to the charging device, and prevent subsequent use of the battery device. By determining the validity of the battery device when the battery device is connected to the charging device, the management device can prevent use of an invalid battery device more reliably.

The manager may obtain, as the item of position information, an item of position information obtained by a position sensor included in a terminal held by a person on the vehicle.

According to the above aspect, the management device uses the position information of the terminal held by the person on the vehicle, as the position information of the battery device. When the person holding the terminal is on the vehicle, the battery device and the terminal of the user are close to each other (for example, within about several tens of centimeters or within about one meter), so that the position information obtained by the terminal can be used as the position information of the battery device. The terminal typically includes a position sensor. Therefore, in the case where the battery device does not include a position sensor, the management device can use the position sensor of the terminal to substitute the position information of the terminal for the position information of the battery device, to manage the validity of the battery device. Hence, even in the case where the battery device does not include a position sensor, the management device can prevent use of an invalid battery device.

A management system according to an aspect of the present invention includes: the management device described above; and the vehicle that uses, as the power source, the battery device whose validity is managed by the management device

According to the above aspect, the management system includes the management device and the vehicle, and achieves the same effects as the management device.

The management system may further include: the battery device used as the power source of the vehicle.

According to the above aspect, the management system includes the management device, the vehicle, and the battery device, and achieves the same effects as the management device.

A management method according to an aspect of the present invention is a management method of managing validity of a battery device used as a power source of a vehicle, the management method including: maintaining management information by obtaining an identifier of the battery device and an item of position information indicating a position of the battery device a plurality of times and, each time the identifier and the item of position information are obtained, recording the identifier obtained and the item of position information obtained in the management information in association with each other; determining whether a same identifier is associated with a plurality of items of position information different from each other at one point in time, with reference to the management information; and outputting information for disabling authentication of the battery device when it is determined in the determining that the same identifier is associated with the plurality of items of position information, and causing a start process of the vehicle to stop based on a failure of authentication in an authentication process performed between the vehicle and the battery device after the information is output.

According to the above aspect, the same effects as the management device are achieved.

A program according to an aspect of the present invention is a program for causing a computer to execute the management method described above.

According to the above aspect, the same effects as the management method are achieved.

These general and specific aspects may be implemented using a system, a method, an integrated circuit, a computer program, or a computer-readable recording medium such as CD-ROM, or any combination of a system, a device, an integrated circuit, a computer program, and a recording medium.

Embodiments will be described in detail below, with reference to the drawings.

The embodiments described below each show a general or specific example. The numerical values, shapes, materials, structural elements, the arrangement and connection of the structural elements, steps, the order of steps, etc. shown in the following embodiments are mere examples, and do not limit the scope of the present invention. Of the structural elements in the embodiments described below, the structural elements not recited in any one of the independent claims representing the broadest concepts are described as optional structural elements.

### [Embodiment]

This embodiment describes a management device, etc. that prevent use of an invalid battery device.

FIG. 1 is a block diagram schematically illustrating a structure of management system 1 in this embodiment.

As illustrated in FIG. 1, management system 1 includes management device 10 and wheeled vehicle 20. Management system 1 may further include battery device 30. Management system 1 prevents use of invalid battery device 30, using terminal 40, certificate authority 50, and charging device 60.

Management device 10 is a computer that manages the validity of battery device 30. At predetermined timing, management device 10 obtains an identifier of battery device 30 and position information (also referred to as "item of position information" particularly when the number is concerned) indicating the position of battery device 30, determines the validity of battery device 30 by determining whether the same identifier is associated with a plurality of items of position information different from each other, and outputs the result.

Wheeled vehicle 20 is an electric wheeled vehicle that is driven by electricity supplied from battery device 30 as a power source. Examples of wheeled vehicle 20 include an electric bicycle, an electric car, an electric motorcycle, and an electric scooter. More generally, wheeled vehicle 20 may be any vehicle driven by electricity, such as a manned drone. In a start process, wheeled vehicle 20 transmits the identifier and the position information of battery device 30 connected to wheeled vehicle 20, to management device 10. Wheeled vehicle 20 is controlled not to start when invalid battery device 30 is connected, by certificate authority 50 and the like.

Battery device 30 is a device including a battery used as a power source of wheeled vehicle 20. Battery device 30 includes a secondary battery, and is charged by charging device 60. Battery device 30 may be charged in a facility (for example, user U's home or a parking lot of a shopping center or the like) different from charging device 60.

Terminal 40 is an information terminal held (possessed) by user U of wheeled vehicle 20, and is, for example, a mobile phone, a smartphone, or a tablet. Terminal 40 is connected to network N through a mobile phone line (3G, 4G, Long Term Evolution (LTE)) or Wi-Fi^{®}, and is capable of communicating with each device included in management system 1 via network N. Moreover, terminal 40 is capable of communicating with wheeled vehicle 20 by short-range wireless communication (for example, Bluetooth^{®}). When terminal 40 receives an operation of instructing terminal 40 to start wheeled vehicle 20 from user U, terminal 40 causes wheeled vehicle 20 to perform the start process. In the start process, in the case where authentication between wheeled vehicle 20 and battery device 30 succeeds, wheeled vehicle 20 starts and can be driven. In the case where the authentication fails, wheeled vehicle 20 does not start.

Certificate authority 50 is a computer that issues and manages authentication information of each device included in management system 1. Specifically, certificate authority 50 issues and manages a certificate (also referred to as "public key certificate") of a public key of each device included in management system 1. Certificate authority 50 also manages a revocation list indicating revoked certificates out of issued public key certificates. In the case where certificate authority 50 receives, from management device 10, the identifier of battery device 30 determined as not authorized (i.e. determined as invalid) by management device 10, certificate authority 50 adds information for revoking the public key certificate of battery device 30 to the revocation list. The revocation list including the information for revoking the public key certificate of battery device 30 is then obtained by wheeled vehicle 20 and used in the authentication process between wheeled vehicle 20 and battery device 30. Consequently, the start process of wheeled vehicle 20 fails based on the revocation of the public key certificate of battery device 30.

Charging device 60 is a device that supplies electricity to battery device 30 to charge battery device 30. Charging device 60 is connected to one or more battery devices, and supplies electricity to each of the one or more battery devices 30. When battery device 30 is connected to charging device 60, charging device 60 transmits the identifier of connected battery device 30 to management device 10.

FIG. 2 is a block diagram illustrating functions of each device included in management system 1 in this embodiment. A structure of each device will be described below, with reference to FIG. 2.

As illustrated in FIG. 2, management device 10 includes authenticator 11, manager 12, determiner 13, and outputter 14. Each functional unit included in management device 10 can be implemented by a central processing unit (CPU) (not illustrated) included in management device 10 executing a program using memory.

Authenticator 11 is a functional unit that performs an authentication process with each of authenticator 21 in wheeled vehicle 20 and authenticator 61 in charging device 60. Authenticator 11 holds a private key and a public key certificate of management device 10 and a public key of certificate authority 50. Authenticator 11 performs an authentication process in response to an authentication request received from authenticator 21 in wheeled vehicle 20 via terminal 40. Authenticator 11 also performs an authentication process in response to an authentication request received from authenticator 61 in charging device 60.

Manager 12 is a functional unit that maintains management information associating the identifier and the position information of battery device 30. Manager 12 maintains the management information by obtaining the identifier of battery device 30 and the position information indicating the position of battery device 30 a plurality of times and, each time the identifier and the position information are obtained, recording the obtained identifier and position information in the management information in association with each other. An example of the obtainment of the identifier and the position information of battery device 30 by manager 12 is that manager 12 obtains the identifier and the position information provided from wheeled vehicle 20 when wheeled vehicle 20 starts in a state in which battery device 30 is connected to wheeled vehicle 20. Another example of the obtainment is that manager 12 obtains the identifier and an identifier of charging device 60 provided from charging device 60 when battery device 30 is connected to charging device 60. It is assumed here that the identifier of charging device 60 and position information of charging device 60 correspond one-to-one to each other.

Determiner 13 is a functional unit that determines the validity of battery device 30. Determiner 13 determines whether the same identifier is associated with a plurality of items of position information different from each other at one point in time, with reference to the management information maintained in manager 12.

Outputter 14 is a processing unit that outputs information indicating the result of determination by determiner 13. In the case where determiner 13 determines that the same identifier is associated with a plurality of items of position information, outputter 14 outputs information indicating that battery device 30 is invalid.

More specifically, outputter 14 outputs, as the foregoing information, information for disabling authentication of battery device 30. Outputter 14 thus causes the start process of wheeled vehicle 20 to fail based on a failure of authentication in the authentication process performed between wheeled vehicle 20 and battery device 30 after the information is output.

For example, the authentication process is a public key-based authentication process. In this case, outputter 14 outputs, as the foregoing information, revocation information for revoking the public key certificate of battery device 30 to certificate authority 50. Outputter 14 thus causes the start process of wheeled vehicle 20 to fail based on a failure of authentication in the public key-based authentication process performed between wheeled vehicle 20 and battery device 30 using the revocation information which wheeled vehicle 20 obtains from certificate authority 50 after the revocation information is output to certificate authority 50.

Manager 12 may obtain the identifier and the position information provided in the start process of wheeled vehicle 20, and outputter 14 may further output, as the foregoing information, information for stopping the start process to wheeled vehicle 20.

As illustrated in FIG. 2, wheeled vehicle 20 includes authenticator 21, controller 22, and driver 23. Each functional unit included in wheeled vehicle 20 can be implemented by a CPU (not illustrated) included in vehicle 20 executing a program using memory. Connection between wheeled vehicle 20 and battery device 30 includes connection through a communication line and electric connection that enables transfer of electricity. When wheeled vehicle 20 starts, wheeled vehicle 20 and terminal 40 are connected so as to be capable of communicating by short-range wireless communication, and wheeled vehicle 20 is capable of communicating with management device 10 via terminal 40. In the case where wheeled vehicle 20 includes a communication interface that connects directly to network N, wheeled vehicle 20 may communicate with management device 10 without via terminal 40.

Authenticator 21 is a functional unit that performs an authentication process with each of authenticator 31 in battery device 30, authenticator 41 in terminal 40, and authenticator 11 in management device 10. Authenticator 21 holds a private key and a public key certificate of wheeled vehicle 20 and a public key of certificate authority 50. When wheeled vehicle 20 receives a start instruction from terminal 40, authenticator 21 transmits an authentication request to authenticator 31 in battery device 30, and performs an authentication process. Authenticator 21 also transmits an authentication request to authenticator 41 in terminal 40, and performs an authentication process. Authenticator 21 further transmits an authentication request to authenticator 11 in management device 10 via terminal 40, and performs an authentication process. In the authentication with authenticator 31 in battery device 30, authenticator 21 obtains the revocation list from certificate authority 50 via terminal 40. In the case where battery device 30 is recorded in the obtained revocation list, the authentication fails.

Controller 22 is a controller that controls the start process of wheeled vehicle 20. Upon receiving a start instruction from terminal 40, controller 22 starts the start process. In the start process, controller 22 obtains, from battery device 30 connected to wheeled vehicle 20, the identifier of battery device 30 by communication.

Controller 22 also obtains position information obtained by terminal 40, as the position information of battery device 30. When wheeled vehicle 20 starts, wheeled vehicle 20 and terminal 40 are located at such a distance that allows short-range wireless communication (for example, within several meters), and wheeled vehicle 20 and battery device 30 are located at such a distance that allows connection (for example, within several centimeters). Accordingly, the position information obtained by terminal 40 can be regarded as the position information of battery device 30. In the case where wheeled vehicle 20 or battery device 30 includes a position sensor, position information obtained by the position sensor in wheeled vehicle 20 or battery device 30 may be used as the position information of battery device 30.

Controller 22 transmits the obtained identifier and position information of battery device 30 to management device 10.

In the start process, controller 22 causes authenticator 21 to perform the authentication process on battery device 30. In the case where authentication in the authentication process succeeds, controller 22 continues the start process. In the case where the authentication process by authenticator 21 fails in the start process, controller 22 stops the start process and consequently stops driver 23 from starting.

Driver 23 is a functional unit that drives wheeled vehicle 20. Driver 23 includes components relating to driving of wheeled vehicle 20, such as a motor, a brake, a steering wheel, and a shaft. Driver 23 also includes a terminal for electric connection to battery device 30, and is supplied from electricity via the terminal. If the start process by controller 22 succeeds in a state in which battery device 30 is connected to wheeled vehicle 20, driver 23 can drive wheeled vehicle 20 by electricity supplied from battery device 30.

Wheeled vehicle 20 may further include a presenter (not illustrated) that presents information by display on a screen, sound output, and the like. When the start process of wheeled vehicle 20 is stopped, the presenter may present information indicating that the start process is stopped.

As illustrated in FIG. 2, battery device 30 includes authenticator 31 and charger/discharger 32. Each functional unit included in battery device 30 can be implemented by a CPU (not illustrated) included in battery device 30 executing a program using memory.

Authenticator 31 is a functional unit that performs an authentication process with authenticator 21 in wheeled vehicle 20. Authenticator 31 holds a private key and a public key certificate of battery device 30 and a public key of certificate authority 50. Authenticator 31 performs an authentication process in response to an authentication request received from authenticator 21 in wheeled vehicle 20.

Charger/discharger 32 is a functional unit that charges or discharges electricity. Charger/discharger 32 includes a terminal for electric connection to wheeled vehicle 20. Charger/discharger 32 includes a power storage element that charges and discharges electricity, a charging circuit that charges electricity to the power storage element, and a discharging circuit that discharges electricity from the power storage element and supplies it to wheeled vehicle 20. Charger/discharger 32 supplies electricity to wheeled vehicle 20 via the terminal.

As illustrated in FIG. 2, terminal 40 includes authenticator 41, position sensor 42, receiver 43, presenter 44, and start controller 45. Each functional unit included in terminal 40 can be implemented by a CPU (not illustrated) included in terminal 40 executing a program using memory.

Authenticator 41 is a functional unit that performs an authentication process with authenticator 21 in wheeled vehicle 20. Authenticator 41 holds a private key and a public key certificate of terminal 40 and a public key of certificate authority 50. Authenticator 41 performs an authentication process in response to an authentication request received from authenticator 21 in wheeled vehicle 20. In the case where the authentication process succeeds, authenticator 41 relays communication data between wheeled vehicle 20 and management device 10 to establish communication between wheeled vehicle 20 and management device 10.

Position sensor 42 is a sensor that obtains position information indicating the position of terminal 40. For example, position sensor 42 is a GPS receiver that obtains the position information of terminal 40 by the Global Positioning System (GPS). Position sensor 42 provides the obtained position information to wheeled vehicle 20.

Receiver 43 is a functional unit that receives operations from user U. Receiver 43 receives an operation of starting wheeled vehicle 20. There are various forms in which receiver 43 receives an operation, such as touch input to an image displayed on a touch panel display and sound input. In the case of touch input, an operation by user U is identified by a process of recognizing the position touched by user U on the display screen. In the case of sound input, an operation by user U is identified by a sound recognition process of recognizing sound uttered by user U.

Presenter 44 is a functional unit that presents information by display on a screen, sound output, and the like. The presented information is expected to be viewed or heard by user U. When the start process of wheeled vehicle 20 is stopped, presenter 44 may present information indicating that the start process is stopped. When the start process of wheeled vehicle 20 is not stopped but continued and the start succeeds, presenter 44 may present information indicating that the start process succeeds.

Start controller 45 is a functional unit that controls controller 22 in wheeled vehicle 20 to perform the start process of wheeled vehicle 20 when receiver 43 receives an operation of starting wheeled vehicle 20.

As illustrated in FIG. 2, certificate authority 50 includes issuer 51 and list manager 52.

Issuer 51 is a functional unit that issues public key certificates. The public key certificates for the respective public keys of management device 10, wheeled vehicle 20, battery device 30, terminal 40, and charging device 60 are each information certifying the ownership of the public key by the device. Issuer 51 adds an electronic signature of certificate authority 50 to information including the public key of the device to generate a public key certificate and provides the generated public key certificate to the device beforehand.

List manager 52 is a functional unit that manages revocation information indicating each revoked public key certificate out of the public key certificates issued by issuer 51. In the case where revocation information for revoking the public key certificate of battery device 30 is output from outputter 14 in management device 10, list manager 52 records information indicating the public key certificate of battery device 30 in the revocation list. The revocation list is then provided to authenticator 21 in wheeled vehicle 20 and used for the authentication process between wheeled vehicle 20 and battery device 30.

As illustrated in FIG. 2, charging device 60 includes authenticator 61, obtainer 62, and power source 63.

Authenticator 61 is a functional unit that performs an authentication process with authenticator 11 in management device 10. Authenticator 61 holds a private key and a public key certificate of charging device 60 and a public key of certificate authority 50. Authenticator 61 performs an authentication process in response to an authentication request received from authenticator 11 in management device 10.

Obtainer 62 is a functional unit that obtains the identifier of battery device 30 connected to charging device 60. Obtainer 62 obtains, from battery device 30 connected to charging device 60, the identifier of battery device 30 by communication, and provides the obtained identifier to management device 10.

Power source 63 is a functional unit that charges battery device 30 connected to charging device 60 by supplying electricity. Power source 63 is supplied with electricity from a system power source, a power generation facility, a power storage facility, or the like, and supplies the supplied electricity to battery device 30.

An example of the management information maintained in manager 12 and the determination by determiner 13 in management device 10 will be described below.

FIG. 3 is an explanatory diagram illustrating a first example of the management information in this embodiment. The management information illustrated in FIG. 3 is an example of the management information maintained in manager 12 in management device 10.

As illustrated in FIG. 3, each entry in the management information includes a battery ID, a connection destination, a charging device ID, a wheeled vehicle ID, position information, an authentication time, a connection start time, and a connection end time as items. One entry in the management information is generated in response to connection of one battery device 30 to wheeled vehicle 20 or charging device 60.

The battery ID is an identifier for uniquely identifying battery device 30 related to the entry.

The connection destination is information indicating the device to which battery device 30 related to the entry was connected, and indicates wheeled vehicle 20 or charging device 60.

The charging device ID indicates, in the case where battery device 30 related to the entry was connected to charging device 60, the identifier of connected charging device 60. It is assumed that the charging device ID corresponds one-to-one to the position information of the installation position of charging device 60 beforehand. In this case, the charging device ID serves as the position information indicating the position of charging device 60.

The wheeled vehicle ID indicates, in the case where battery device 30 related to the entry was connected to wheeled vehicle 20, the identifier of connected wheeled vehicle 20.

The position information includes the position information of battery device 30 related to the entry when wheeled vehicle 20 connected to battery device 30 started. The position information is not essential in the case where battery device 30 related to the entry was connected to charging device 60. In such a case, the position information may be the position information of charging device 60 set beforehand.

The authentication time is information indicating the time at which, after battery device 30 related to the entry was connected to wheeled vehicle 20, the authentication process between battery device 30 and wheeled vehicle 20 succeeded.

The connection start time is information indicating the time at which, in the case where battery device 30 related to the entry was connected to charging device 60, the connection started.

The connection end time is information indicating the time at which, in the case where battery device 30 related to the entry was connected to charging device 60, the connection ended. When battery device 30 is in a state of being connected to charging device 60, the connection end time is not set, and therefore the time is not indicated. In such a case, for example, the connection end time may be set to "(connecting)".

Thus, the battery ID and the position information of battery device 30 are recorded in the management information in association with each other. As the position information, the position information of battery device 30 is used in the case where battery device 30 is connected to wheeled vehicle 20, and the position information of charging device 60 corresponding one-to-one to the charging device ID is used in the case where battery device 30 is connected to charging device 60.

Entry E1 in the first row in FIG. 3 indicates that battery device 30 having battery ID "B01345" was connected to wheeled vehicle 20 having wheeled vehicle ID "H224", the position information when wheeled vehicle 20 started is "latitude 35 degrees 40 minutes 8.4 seconds north, longitude 139 degrees 46 minutes 40.8 seconds east", and the time at which the authentication between wheeled vehicle 20 and battery device 30 succeeded is "2020/01/20 07:45".

Entry E2 in the second row in FIG. 3 indicates that battery device 30 having battery ID "B97143" was connected to charging device 60 having charging device ID "ST221", the time at which the connection to charging device 60 started is "2020/01/20 7:50", and the time at which the connection ended is "2020/01/20 15:02".

Entry E4 in the fourth row in FIG. 3 indicates that battery device 30 having battery ID "B74522" was connected to charging device 60 having charging device ID "ST003", the time at which the connection to charging device 60 started is "2020/01/20 14:54", and battery device 30 is in a connecting state (i.e. the connection has not ended).

Entry E5 in the fifth row in FIG. 3 indicates that battery device 30 having battery ID "B97143" was connected to wheeled vehicle 20 having wheeled vehicle ID "H340", the position information when wheeled vehicle 20 started is "latitude 34 degrees 41 minutes 13.4 seconds north, longitude 135 degrees 31 minutes 31.7 seconds east", and the time at which the authentication between wheeled vehicle 20 and battery device 30 succeeded is "2020/01/20 12:45".

That is, in the management information illustrated in FIG. 3, battery device 30 having battery ID "B97143" is associated with position information of charging device 60 (see entry E2) and also associated with position information of wheeled vehicle 20 (see entry E5) at "2020/01/20 12:45".

Determiner 13 thus determines that the same battery device ID is associated with a plurality of items of position information different from each other at one point in time, with reference to the management information.

FIG. 4 is an explanatory diagram illustrating a second example of the management information in this embodiment. The management information illustrated in FIG. 4 is another example of the management information maintained in manager 12 in management device 10. The items included in each entry in the management information are the same as those in the management information illustrated in FIG. 3. Entries E1, E2, and E4 are the same as those illustrated in FIG. 3.

Entry E6 in the fifth row in FIG. 4 indicates that battery device 30 having battery ID "B01345" was connected to wheeled vehicle 20 having wheeled vehicle ID "H340", the position information when wheeled vehicle 20 started is "latitude 34 degrees 41 minutes 13.4 seconds north, longitude 135 degrees 31 minutes 31.7 seconds east", and the time at which the authentication between wheeled vehicle 20 and battery device 30 succeeded is "2020/01/20 07:45".

That is, in the management information illustrated in FIG. 4, battery device 30 having battery ID "B01345" is associated with position information of wheeled vehicle 20 having wheeled vehicle ID "H224" (see entry E1) and also associated with position information of wheeled vehicle 20 having wheeled vehicle ID "H340" (see entry E6) at "2020/01/20 07:45".

Determiner 13 thus determines that the same battery device ID is associated with a plurality of items of position information different from each other at one point in time, with reference to the management information.

FIG. 5 is an explanatory diagram illustrating a third example of the management information in this embodiment. The management information illustrated in FIG. 5 is another example of the management information maintained in manager 12 in management device 10. The items included in each entry in the management information are the same as those in the management information illustrated in FIG. 3. Entries E1, E2, and E4 are the same as those illustrated in FIG. 3.

Entry E7 in the fifth row in FIG. 5 indicates that battery device 30 having battery ID "B74522" was connected to charging device 60 having charging device ID "ST009", the time at which the connection to charging device 60 started is "2020/01/20 15:32", and the time at which the connection ended is "2020/01/20 17:42".

That is, in the management information illustrated in FIG. 5, battery device 30 having battery ID "B74522" is associated with position information of charging device 60 having charging device ID "ST0003" (see entry E4) and also associated with position information of charging device 60 having charging device ID "ST0009" (see entry E7) at one point in time from "2020/01/20 15:32" onward.

Determiner 13 thus determines that the same battery device ID is associated with a plurality of items of position information different from each other at one point in time, with reference to the management information.

FIG. 6 is an explanatory diagram illustrating an example of the revocation list in this embodiment.

The revocation list illustrated in FIG. 6 is a list indicating each revoked certificate out of the public key certificates issued by certificate authority 50.

One entry in the revocation list corresponds to one revoked certificate. One entry in the revocation list includes a revoked certificate number and a date and time at which the certificate was revoked.

For example, the entry in the first row in the revocation list illustrated in FIG. 6 indicates that a public key certificate having certificate number "23534" was revoked at "2020/01/20 12:45".

The entry in the revocation list illustrated in FIG. 6 is an example of an entry generated by certificate authority 50 when determiner 13 determines that battery device 30 having battery ID "B97143" is associated with a plurality of items of position information at one point in time based on the management information illustrated in FIG. 3.

As a result of the revocation list illustrated in FIG. 6 being provided to wheeled vehicle 20, the authentication process for battery device 30 corresponding to certificate number "23534" by wheeled vehicle 20 fails, so that the start process of wheeled vehicle 20 can be stopped.

Processes by management system 1 having the above-described structure will be described below.

Processes by management system 1 at (1) the timing at which wheeled vehicle 20 connected to battery device 30 starts and (2) the timing at which battery device 30 is connected to charging device 60 will be described below.

### (1) Timing at which wheeled vehicle 20 connected to battery device 30 starts

FIG. 7 is a flowchart illustrating a process by wheeled vehicle 20 in this embodiment. FIG. 8 is a flowchart illustrating a first process by management device 10 in this embodiment. FIG. 9 is a sequence diagram illustrating a first process by management system 1 in this embodiment. The process by management system 1 at the timing at which wheeled vehicle 20 connected to battery device 30 starts will be described below, with reference to FIGS. 7, 8, and 9.

In FIGS. 7, 8, and 9, the same processes are given the same reference signs. FIG. 9 illustrates the case where the determination in Step S204 results in Yes and the determination in Step S107 results in No.

First, the process by wheeled vehicle 20 and the process by management system 1 at the timing at which wheeled vehicle 20 connected to battery device 30 starts will be described below, with reference to FIGS. 7 and 9.

As illustrated in FIG. 7, in Step S101, authenticator 21 obtains a start instruction and position information. The start instruction and the position information obtained by authenticator 21 are transmitted from terminal 40. The start instruction is transmitted as a result of terminal 40 receiving the start instruction from user U via receiver 43 (Steps S221 to S222 in FIG. 9).

Authenticator 21 may perform an authentication process with authenticator 41 in terminal 40 before or after obtaining the start instruction. Information indicating the start instruction may have an electronic signature of terminal 40 added thereto. In such a case, authenticator 21 can determine that the start instruction is from terminal 40 by verifying the electronic signature.

Wheeled vehicle 20 may perform the subsequent steps only when a start instruction from predetermined terminal 40 is obtained. For example, wheeled vehicle 20 may perform the subsequent steps only when a start instruction from user U having the right to use wheeled vehicle 20 is obtained, and not perform the subsequent steps when a start instruction from user U not having the right is obtained.

In Step S102, authenticator 21 performs an authentication process and a sharing process of sharing a common key with authenticator 11 in management device 10. As the authentication process, an authentication process using public key authentication can be employed. As the sharing process, a conventional technique for encrypted communication using a private key and a public key (for example, a common key sharing process performed prior to Secure Sockets Layer (SSL) encrypted communication) can be employed.

In Step S103, authenticator 21 obtains the revocation list from certificate authority 50. In the case where a battery ID of an invalid battery device is added to the revocation list in Step S241 described later, authenticator 21 obtains the revocation list after the addition.

In Step S104, authenticator 21 performs an authentication process with authenticator 31 in battery device 30 connected to wheeled vehicle 20 (Step S231 in FIG. 9). In the authentication process, authenticator 21 obtains the battery ID of battery device 30. In the case where the authentication process succeeds (Step S104: Yes), the process advances to Step S105. Otherwise (Step S104: No), the process advances to Step S111. In the case where battery device 30 has a battery ID of an invalid battery device, the authentication process fails.

In Step S105, authenticator 21 transmits the battery ID of battery device 30 obtained in Step S104 and the position information obtained in Step S101 to management device 10. The battery ID and the position information are encrypted using the common key shared in Step S102.

In Step S106, controller 22 obtains start permission/non-permission information from management device 10.

In Step S107, controller 22 determines whether the start permission/non-permission information obtained in Step S106 is information for permitting start of wheeled vehicle 20. In the case where controller 22 determines that the start permission/non-permission information is information for permitting start of wheeled vehicle 20 (Step S107: Yes), the process advances to Step S108. Otherwise (Step S107: No), the process advances to Step S111.

In Step S108, controller 22 continues the start process. Consequently, controller 22 starts wheeled vehicle 20.

In Step S109, in the case where the start of wheeled vehicle 20 succeeds as a result of continuing the start process in Step S108, controller 22 transmits a notification indicating the completion of the start to terminal 40. Based on the transmitted notification, terminal 40 presents the notified information by presenter 44 so as to be recognized by the user. Step S109 is not an essential process. After Step S109, the series of processes illustrated in FIG. 7 ends.

In Step S111, controller 22 stops the start process. Consequently, controller 22 stops the start of wheeled vehicle 20.

In Step S112, in the case where the start of wheeled vehicle 20 fails as a result of stopping the start process in Step S111, controller 22 transmits a notification indicating the failure of the start to terminal 40. Based on the transmitted notification, terminal 40 presents the notified information by presenter 44 so as to be recognized by the user (Step S223 in FIG. 9). Step S112 is not an essential process. After Step S112, the series of processes illustrated in FIG. 7 ends.

Next, the process by management device 10 and the process by management system 1 at the timing at which wheeled vehicle 20 connected to battery device 30 starts will be described below, with reference to FIGS. 8 and 9.

As illustrated in FIG. 8, in Step S201, authenticator 11 performs an authentication process and a sharing process of sharing a common key with authenticator 21 in wheeled vehicle 20. The authentication process and the sharing process are respectively the same as the authentication process and the sharing process in FIG. 7.

In Step S202, manager 12 obtains the battery ID and the position information of battery device 30 connected to wheeled vehicle 20. The obtained battery ID and position information are transmitted from wheeled vehicle 20 (Step S105 in FIG. 7). The communication for obtaining the battery ID and the position information is encrypted using the common key shared in Step S201.

In Step S203, manager 12 records the battery ID and the position information obtained in Step S202 in the management information in association with each other.

In Step S204, manager 12 determines whether the same battery ID is associated with a plurality of items of position information in the management information. In the case where manager 12 determines that the same battery ID is associated with a plurality of items of position information (Step S204: Yes), the process advances to Step S205. Otherwise (Step S204: No), the process advances to Step S211.

In Step S205, manager 12 notifies certificate authority 50 of the battery ID determined to be associated with a plurality of items of position information, as a battery ID of an invalid battery device. Having received the notification, certificate authority 50 adds the notified battery ID to the revocation list (Step S241). In the case where the revocation list is requested by wheeled vehicle 20 subsequently, certificate authority 50 transmits the revocation list having the battery ID added thereto, to wheeled vehicle 20. Consequently, the authentication in the authentication process between wheeled vehicle 20 that has received the revocation list and battery device 30 whose battery ID has been recorded in the revocation list fails, and the start process of wheeled vehicle 20 is stopped (Step S104: No, Step S111 in FIG. 7).

In Step S206, manager 12 transmits start permission/non-permission information indicating to stop the start of wheeled vehicle 20, to wheeled vehicle 20. Hence, the start process of wheeled vehicle 20 is stopped, as a result of which the start of wheeled vehicle 20 fails (Step S111 in FIG. 7). Step S206 is not an essential process.

In Step S211, manager 12 transmits start permission/non-permission information indicating to permit the start of wheeled vehicle 20, to wheeled vehicle 20. Hence, the start process of wheeled vehicle 20 is continued, as a result of which wheeled vehicle 20 starts (Step S108 in FIG. 7). Step S211 is not an essential process.

After Step S206 or S211, the series of processes illustrated in FIG. 8 ends.

Thus, management device 10 can prevent use of invalid battery device 30 using the battery ID and the position information obtained at the timing at which wheeled vehicle 20 connected to battery device 30 starts.

In the case of not performing Step S206, wheeled vehicle 20 starts using invalid battery device 30. In such a case, after the start, management device 10 may transmit information for stopping the operation of wheeled vehicle 20 to wheeled vehicle 20.

### (2) Timing at which battery device 30 is connected to charging device 60

FIG. 10 is a flowchart illustrating a second process by management device 10 in this embodiment. FIG. 11 is a sequence diagram illustrating a second process by management system 1 in this embodiment. The process by management system 1 at the timing at which battery device 30 is connected to charging device 60 will be described below, with reference to FIGS. 10 and 11. In FIGS. 10 and 11, the same processes are given the same reference signs.

Here, the process by management system 1 in the case where a battery device (also referred to as "used battery") used by wheeled vehicle 20 is removed from wheeled vehicle 20 and connected to charging device 60 and a battery device (also referred to as "charged battery") removed from charging device 60 is connected to wheeled vehicle 20 will be described below (Steps S321 and S322).

Terminal 40 obtains a used battery ID (Step S331), and transmits the obtained used battery ID together with the user ID of user U to charging device 60 (Step S332). There are various methods by which terminal 40 obtains the used battery ID. Examples include a method by which terminal 40 reads, by image capture, a code (bar code, two-dimensional code, etc.) displayed on a housing of the used battery device, and a method by which user U visually reads information such as a number displayed on the housing of the used battery device and inputs the information to terminal 40.

In Step S301, authenticator 11 performs an authentication process and a sharing process of sharing a common key with authenticator 61 in charging device 60 (Step S341 in FIG. 11). The authentication process and the sharing process are respectively the same as the authentication process and the sharing process in FIG. 7.

In Step S302, manager 12 obtains the battery ID (also referred to as "used battery ID") of battery device 30 connected to charging device 60, the battery ID (also referred to as "charged battery ID") of battery device 30 removed from charging device 60, and the charging device ID of charging device 60. The obtained used battery ID, charged battery ID, and charging device ID are transmitted from charging device 60 (Step S342 in FIG. 11). The communication for obtaining the used battery ID, the charged battery ID, and the charging device ID is encrypted using the common key shared in Step S301.

In Step S303, manager 12 records the used battery ID and the charging device ID obtained in Step S302 in the management information in association with each other. Manager 12 also records the connection start time for the recorded used battery ID.

In Step S304, manager 12 records the connection end time for the charged battery ID obtained in Step S302.

In Step S305, manager 12 determines whether the same battery ID is associated with a plurality of items of position information in the management information. In the case where manager 12 determines that the same battery ID is associated with a plurality of items of position information (Step S305: Yes), the process advances to Step S306. Otherwise (Step S305: No), the series of processes illustrated in FIG. 10 ends.

In Step S306, manager 12 notifies certificate authority 50 of the battery ID determined to be associated with a plurality of items of position information, as a battery ID of an invalid battery device. Having received the notification, certificate authority 50 adds the notified battery ID to the revocation list (Step S351). The process after the notification to certificate authority 50 is the same as the process in Step S205 in FIG. 8.

Thus, management device 10 can prevent use of an invalid battery device using the battery ID and the position information obtained at the timing at which battery device 30 is connected to charging device 60.

Although the above describes the case where determiner 13 in management device 10 determines whether the same battery device ID is associated with a plurality of items of position information different from each other at one point in time, the term "one point in time" may be used to encompass a time of certain duration.

For example, "one point in time" may be a time of predetermined duration such as about several minutes or several tens of minutes.

Moreover, "one point in time" may be determined according to the distance between two positions. In detail, the duration of time required for wheeled vehicle 20 to move between two locations may be "one point in time". For example, suppose the moving speed of wheeled vehicle 20 is 60 km/h. For two locations 60 km apart from each other, "one point in time" may have duration of one hour. If one battery device ID is associated with one battery device 30, a battery having the same battery device ID cannot be present at the two different locations within this time. In other words, the presence of a battery having the same battery device ID at the two different locations within this time suggests high probability that the battery device ID is copied unauthorizedly.

Instead of determining whether the same battery device ID is associated with a plurality of items of position information different from each other at one point in time, determiner 13 may perform determination based on the number of wheeled vehicles 20 connected to battery device 30. In detail, determiner 13 may determine whether battery device 30 of one battery device ID was connected to at least a predetermined number of wheeled vehicles 20 within a predetermined time (for example, one day). In the case where determiner 13 determines that battery device 30 of one battery device ID was connected to at least the predetermined number of wheeled vehicles 20 within the predetermined time, outputter 14 may output information indicating that battery device 30 is invalid.

Determiner 13 may perform determination based on the distance that can be traveled by wheeled vehicle 20 from a fully charged state. In detail, determiner 13 may determine whether, after the start process of wheeled vehicle 20 was performed, the next start process of wheeled vehicle 20 was performed at a distance greater than the distance that can be traveled by wheeled vehicle 20 on a single charge (for example, about 300 km for an electric car, about 30 km for an electric motorcycle). In the case where determiner 13 determines that the next start process of wheeled vehicle 20 was performed at a distance greater than the distance that can be traveled by wheeled vehicle 20 on a single charge, outputter 14 may output information indicating that battery device 30 is invalid.

Determiner 13 may perform determination based on the remaining battery level of battery device 30. In detail, determiner 13 may determine whether the remaining battery level of battery device 30 is higher by at least a predetermined value than the remaining battery level when wheeled vehicle 20 connected to battery device 30 started last time or the remaining battery level when battery device 30 was removed from charging device 60. In the case where determiner 13 determines that the remaining battery level is higher by at least the predetermined value, outputter 14 may output information indicating that battery device 30 is invalid.

### (Variation of Embodiment)

FIG. 12 is a block diagram schematically illustrating a structure of management device 10A in this variation.

Management device 10A manages the validity of a battery device use as a power source of a vehicle.

As illustrated in FIG. 12, management device 10A includes manager 12A, determiner 13A, and outputter 14A.

Manager 12A maintains management information by obtaining an identifier of a battery device and position information indicating the position of the battery device a plurality of times and, each time the identifier and the position information are obtained, recording the obtained identifier and position information in the management information in association with each other.

Determiner 13A determines whether the same identifier is associated with a plurality of items of position information different from each other at one point in time, with reference to the management information.

Outputter 14A outputs information for disabling authentication of the battery device in the case where determiner 13A determines that the same identifier is associated with a plurality of items of position information, to stop the start process of the vehicle based on a failure of authentication in the authentication process performed between the vehicle and the battery device after the information is output.

FIG. 13 is a flowchart illustrating a process by management device 10A in this variation.

As illustrated in FIG. 13, in Step S1 (management step), management information is maintained by obtaining an identifier of a battery device and position information indicating the position of the battery device a plurality of times and, each time the identifier and the position information are obtained, recording the obtained identifier and position information in the management information in association with each other.

In Step S2 (determination step), whether the same identifier is associated with a plurality of items of position information different from each other at one point in time is determined with reference to the management information.

In Step S3 (output step), in the case where it is determined that the same identifier is associated with a plurality of items of position information, information for disabling authentication of the battery device is output to stop the start process of the vehicle based on a failure of authentication in the authentication process performed between the vehicle and the battery device after the information is output.

Management device 10A can thus prevent use of an invalid battery device.

As described above, the management device according to this embodiment determines whether the same identifier of the battery device is associated with a plurality of items of position information, with reference to the management information. Thus, the management device can manage whether information unique to the battery device is copied unauthorizedly. The identifier of the battery device is information unique to the battery device, and one identifier is assigned to one battery device. A state in which the same identifier is associated with a plurality of items of position information indicates that the information unique to the battery device is copied and held by a plurality of battery devices. The management device outputs information for disabling authentication of the battery device having the copied unique information, to cause the start process of the vehicle to stop. The management device thus contributes to prevention of use of the battery device. Hence, the management device can prevent use of an invalid battery device.

Moreover, the management device causes, by the output information, the public key-based authentication process between the vehicle and the battery device to fail, thus causing the start process of the vehicle to stop. In this way, the management device more easily prevents an invalid battery device from being connected to the vehicle and used. Hence, the management device can prevent use of an invalid battery device more easily.

Moreover, the management device obtains the identifier and the position information provided in the start process of the vehicle, and causes the ongoing start process to stop in the case where the management device determines that the same identifier is associated with a plurality of items of position information. Thus, the management device can cause the start of the vehicle in a state of being connected to an invalid battery device to fail without even one success. Hence, the management device can prevent use of an invalid battery device more reliably.

Moreover, the management device obtains the identifier and the position information provided when the battery device is connected to the charging device, and determines whether the same identifier is associated with a plurality of items of position information. Thus, the management device can find an invalid battery device when the battery device is connected to the charging device, and prevent subsequent use of the battery device. By determining the validity of the battery device when the battery device is connected to the charging device, the management device can prevent use of an invalid battery device more reliably.

Moreover, the management device uses the position information of the terminal held by the person on the vehicle, as the position information of the battery device. When the person holding the terminal is on the vehicle, the battery device and the terminal of the user are close to each other (for example, within about several tens of centimeters or within about one meter), so that the position information obtained by the terminal can be used as the position information of the battery device. The terminal typically includes a position sensor. Therefore, in the case where the battery device does not include a position sensor, the management device can use the position sensor of the terminal to substitute the position information of the terminal for the position information of the battery device, to manage the validity of the battery device. Hence, even in the case where the battery device does not include a position sensor, the management device can prevent use of an invalid battery device.

A management system according to this embodiment has the same effects as the management device described above.

A management method according to this embodiment has the same effects as the management device described above.

Each of the structural elements in the foregoing embodiment may be configured in the form of an exclusive hardware product, or may be implemented by executing a software program suitable for the structural element. Each of the structural elements may be implemented by means of a program executing unit, such as a CPU or a processor, reading and executing a software program recorded on a recording medium such as a hard disk or semiconductor memory. Software for implementing the management device, etc. according to the foregoing embodiment is the following program.

The program causes a computer to execute a management method of managing validity of a battery device used as a power source of a vehicle, the management method including: maintaining management information by obtaining an identifier of the battery device and an item of position information indicating a position of the battery device a plurality of times and, each time the identifier and the item of position information are obtained, recording the identifier obtained and the item of position information obtained in the management information in association with each other; determining whether a same identifier is associated with a plurality of items of position information different from each other at one point in time, with reference to the management information; and outputting information for disabling authentication of the battery device when it is determined in the determining that the same identifier is associated with the plurality of items of position information, and causing a start process of the vehicle to stop based on a failure of authentication in an authentication process performed between the vehicle and the battery device after the information is output.

While a management device, a management system, etc. according to one or more aspects have been described above by way of embodiments, the present invention is not limited to such embodiments. Other modifications obtained by applying various changes conceivable by a person skilled in the art to the embodiments and any combinations of the structural elements in different embodiments without departing from the scope of the present invention are also included in the scope of one or more aspects.

### [Industrial Applicability]

The present invention can be used for a management device that manages battery devices used in vehicles.

### [Reference Signs List]

- 1: management system
- 10, 10A: management device
- 11, 21, 31, 41, 61: authenticator
- 12, 12A: manager
- 13, 13A: determiner
- 14, 14A: outputter
- 20: wheeled vehicle
- 22: controller
- 23: driver
- 30: battery device
- 32: charger/discharger
- 40: terminal
- 42: position sensor
- 43: receiver
- 44: presenter
- 45: start controller
- 50: certificate authority
- 51: issuer
- 52: list manager
- 60: charging device
- 62: obtainer
- 63: power source
- E1, E2, E4, E5, E6, E7: entry
- N: network
- U: user

## Claims

1. A management device that manages validity of a battery device used as a power source of a vehicle, the management device comprising:
a manager that maintains management information by obtaining an identifier of the battery device and an item of position information indicating a position of the battery device a plurality of times and, each time the identifier and the item of position information are obtained, recording the identifier obtained and the item of position information obtained in the management information in association with each other;
a determiner that determines whether a same identifier is associated with a plurality of items of position information different from each other at one point in time, with reference to the management information; and
an outputter that outputs information for disabling authentication of the battery device when the determiner determines that the same identifier is associated with the plurality of items of position information, and causes a start process of the vehicle to stop based on a failure of authentication in an authentication process performed between the vehicle and the battery device after the information is output.

2. The management device according to claim 1,
wherein the authentication process is a public key-based authentication process, and
the outputter outputs, as the information, revocation information for revoking a public key certificate of the battery device to a certificate authority, and causes the start process of the vehicle to stop based on the failure of the authentication in the public key-based authentication process performed between the vehicle and the battery device using the revocation information which the vehicle obtains from the certificate authority after the revocation information is output to the certificate authority.

3. The management device according to claim 1 or claim 2,
wherein the manager obtains the identifier and the item of position information provided in the start process of the vehicle, and
the outputter outputs, as the information, information for stopping the start process to the vehicle.

4. The management device according to any one of claim 1 to claim 3,
wherein the manager obtains the identifier and the item of position information provided when the battery device is connected to a charging device.

5. The management device according to any one of claim 1 to claim 4,
wherein the manager obtains, as the item of position information, an item of position information obtained by a position sensor included in a terminal held by a person on the vehicle.

6. A management system comprising:
the management device according to any one of claim 1 to claim 5; and
the vehicle that uses, as the power source, the battery device whose validity is managed by the management device.

7. The management system according to claim 6, further comprising:
the battery device used as the power source of the vehicle.

8. A management method of managing validity of a battery device used as a power source of a vehicle, the management method comprising:
maintaining management information by obtaining an identifier of the battery device and an item of position information indicating a position of the battery device a plurality of times and, each time the identifier and the item of position information are obtained, recording the identifier obtained and the item of position information obtained in the management information in association with each other;
determining whether a same identifier is associated with a plurality of items of position information different from each other at one point in time, with reference to the management information; and
outputting information for disabling authentication of the battery device when it is determined in the determining that the same identifier is associated with the plurality of items of position information, and causing a start process of the vehicle to stop based on a failure of authentication in an authentication process performed between the vehicle and the battery device after the information is output.

9. A program for causing a computer to execute the management method according to claim 8.
